# EUROPEAN PATENT APPLICATION

(11) **EP 4 679 814 A1**
(43) Date of publication of application: **14.01.2026**
(21) Application number: 25188383.1
(22) Date of filing: 09.07.2025
(51) Int. Cl.: H04N 7/18, G06V 10/56

(54) **INFORMATION PROVIDING APPARATUS, INFORMATION PROVIDING METHOD, AND INFORMATION PROVIDING PROGRAM**

(30) Priority: 12.07.2024 JP 2024112653
(71) Applicant: Yokogawa Electric Corporation, Tokyo 180-8750 (JP)
(72) Inventor: ARIYOSHI, Masanobu, Musashino-shi, Tokyo 180-8750 (JP)
(74) Representative: Winter, Brandl - Partnerschaft mbB

(57) **Abstract**

A server device (10) receives conversion information including each conversion value corresponding to each hue, acquires video data of a monitoring target captured by a camera (30), and calculates an evaluation value for evaluating the state of the monitoring target on the basis of the received conversion information and the acquired video data.

## Description

### FIELD

The present invention relates to an information providing apparatus, an information providing method, and an information providing program.

### BACKGROUND

Monitoring cameras are used for the purpose of monitoring a transition and a state of a manufacturing process of a plant, checking the presence or absence of occurrence of abnormality, and the like. An operator can monitor a video captured by the monitoring camera in real time or can look back the video stored in a storage device later (see, for example, JP 2004-336171 A).

However, it is difficult to effectively grasp the state of a monitoring target such as the manufacturing process of the plant. For example, in the case of monitoring in real time, it is necessary for the operator to monitor the video and check the state, and therefore, when it is required that there is no oversight, the burden on the operator increases. In addition, in the case of checking the video stored in the storage device, there is no risk that the operator overlooks the state, but since it is necessary to look back the video later, the burden on the operator increases.

The present invention has been made in view of the above, and an object is to effectively grasp a state of a monitoring target.

### SUMMARY

According to an aspect of the embodiments, an information providing apparatus includes a reception unit that receives conversion information including each conversion value corresponding to each hue, an acquisition unit that acquires video data of a monitoring target captured by an imaging device, and a calculation unit that calculates an evaluation value for evaluating a state of the monitoring target on a basis of the received conversion information and the acquired video data.

According to an aspect of the embodiments, an information providing method of executing, by a computer, a process includes receiving conversion information including each conversion value corresponding to each hue, acquiring video data of a monitoring target captured by an imaging device, and calculating an evaluation value for evaluating a state of the monitoring target on a basis of the received conversion information and the acquired video data.

According to an aspect of the embodiments, an information providing program causing a computer to execute a process includes receiving conversion information including each conversion value corresponding to each hue, acquiring video data of a monitoring target captured by an imaging device, and calculating an evaluation value for evaluating a state of the monitoring target on a basis of the received conversion information and the acquired video data.

### BRIEF DESCRIPTION OF THE DRAWINGS

FIG. 1 is a diagram illustrating a configuration example and a processing example of a process monitoring system according to an embodiment;
FIG. 2 is a diagram illustrating a processing example of evaluation calculation processing of the process monitoring system according to the embodiment;
FIG. 3 is a block diagram illustrating a configuration example of each device of the process monitoring system according to the embodiment;
FIG. 4 is a diagram illustrating an example of a setting information storage unit of a server device according to the embodiment;
FIG. 5 is a diagram illustrating an example of a video data storage unit of the server device according to the embodiment;
FIG. 6 is a diagram illustrating an example of an evaluation value storage unit of the server device according to the embodiment;
FIG. 7 is a diagram for describing an entire HSV model used in the process monitoring system according to the embodiment;
FIG. 8 is a diagram for describing a hue of the HSV model used in the process monitoring system according to the embodiment;
FIG. 9 is a diagram for describing saturation and value of the HSV model used in the process monitoring system according to the embodiment;
FIG. 10 is a diagram illustrating Specific Example 1 of each processing of the process monitoring system according to the embodiment;
FIG. 11 is a diagram illustrating Specific Example 2 of each processing of the process monitoring system according to the embodiment;
FIG. 12 is a diagram illustrating Specific Example 3 of each processing of the process monitoring system according to the embodiment;
FIG. 13 is a diagram illustrating Specific Example 4-1 of each processing of the process monitoring system according to the embodiment;
FIG. 14 is a diagram illustrating Specific Example 4-2 of each processing of the process monitoring system according to the embodiment;
FIG. 15 is a diagram illustrating Specific Example 4-3 of each processing of the process monitoring system according to the embodiment;
FIG. 16 is a diagram illustrating Specific Example 4-4 of each processing of the process monitoring system according to the embodiment;
FIG. 17 is a flowchart illustrating an example of a flow of the entire process monitoring system according to the embodiment;
FIG. 18 is a flowchart illustrating an example of a flow of setting information management processing of the process monitoring system according to the embodiment;
FIG. 19 is a flowchart illustrating an example of a flow of video data management processing of the process monitoring system according to the embodiment;
FIG. 20 is a flowchart illustrating an example of a flow of evaluation value management processing of the process monitoring system according to the embodiment;
FIG. 21 is a flowchart illustrating an example of a flow of alarm management processing of the process monitoring system according to the embodiment; and
FIG. 22 is a diagram describing a hardware configuration example according to the embodiment.

### DETAILED DESCRIPTION OF THE PREFERRED EMBODIMENTS

Hereinafter, an information providing apparatus, an information providing method, and an information providing program according to an embodiment of the present invention will be described in detail with reference to the drawings. Note that the present invention is not limited to the embodiment described below.

Hereinafter, the configuration and processing of a process monitoring system 100, the configuration and processing of each device of the process monitoring system 100, and the flow of processing of the process monitoring system 100 according to the embodiment will be sequentially described, and finally, the effects of the embodiment will be described.

### 1. Configuration and Processing of Process Monitoring System 100

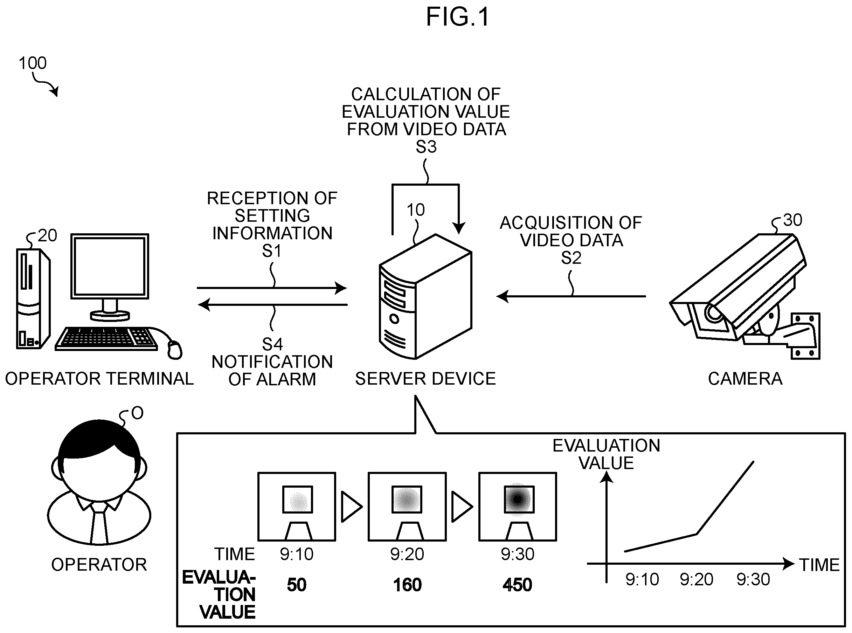

The configuration and processing of the process monitoring system 100 according to the embodiment will be described in detail with reference to FIG. 1. FIG. 1 is a diagram illustrating a configuration example and a processing example of the process monitoring system 100 according to the embodiment. Hereinafter, a configuration example of the entire process monitoring system 100, a processing example of the process monitoring system 100, and an effect of the process monitoring system 100 will be described. Note that, in the embodiment, the monitoring in the manufacturing process of the plant will be described as an example, but the monitoring target and the use field are not limited.

### 1-1. Configuration Example of Entire Process Monitoring System 100

The process monitoring system 100 includes a server device 10, an operator terminal 20, and a camera 30. Here, the server device 10, the operator terminal 20, and the camera 30 are communicably connected in a wired or wireless manner via a predetermined communication network, which is not illustrated. Note that various communication networks such as the Internet and a dedicated line can be adopted as the predetermined communication network.

### 1-1-1. Server Device 10

The server device 10 is an information providing apparatus that calculates an evaluation value for evaluating the state of the manufacturing process of the plant on the basis of the video data acquired from the camera 30. For example, the server device 10 is achieved by a cloud environment, an on-premises environment, an edge environment, or the like. Note that the process monitoring system 100 illustrated in FIG. 1 may include a plurality of server devices 10.

### 1-1-2. Operator Terminal 20

The operator terminal 20 is an administrator terminal used by an operator O who is an administrator of the manufacturing process of the plant. Note that the process monitoring system 100 illustrated in FIG. 1 may include a plurality of operator terminals 20.

### 1-1-3. Camera 30

The camera 30 is an imaging device installed in the manufacturing process of the plant. Note that the process monitoring system 100 illustrated in FIG. 1 may include a plurality of cameras 30.

### 1-2. Processing Example of Entire Process Monitoring System 100

Processing of the entire process monitoring system 100 as described above will be described. Note that the processing of Steps S1 to S4 described below can be executed in a different order. In addition, there may be omitted processing among the pieces of processing of Steps S1 to S4 described below.

### 1-2-1. Setting Information Reception Processing

Firstly, the server device 10 receives setting information from the operator terminal 20 (Step S1). For example, the server device 10 receives and stores the setting information input to a setting screen of the operator terminal 20 by the operator O.

Here, the setting information is information regarding setting when the evaluation value of the monitoring target is calculated, and is, for example, information including a designated range, an area division, conversion information, and the like. The designated range is a range set by the operator O and including each pixel for calculating the evaluation value in the video data. The area division is a division (primary color area, whitish area, blackish area) that is set by the operator O and into which the pigment of the pixel in the video data is classified. The conversion information is a conversion table indicating each conversion value corresponding to each color information, a conversion function, a fixed value, and the like set by the operator O.

### 1-2-2. Video Data Acquisition Processing

Secondly, the server device 10 acquires the video data from the camera 30 (Step S2). For example, the server device 10 acquires video data of a still image captured every one second from the camera 30 installed in the manufacturing process of the plant. In addition, the server device 10 may acquire video data of a moving image from the camera 30 installed in the manufacturing process of the plant.

### 1-2-3. Evaluation Value Calculation Processing

Thirdly, the server device 10 calculates an evaluation value from the video data (Step S3). For example, the server device 10 calculates an evaluation value for evaluating the state of the manufacturing process of the plant using the setting information (example: designated range, area division, conversion information) set by the operator O and the video data acquired from the camera 30.

In the example of FIG. 1, the server device 10 calculates {time: "9:10", evaluation value: "50"}, {time: "9:20", evaluation value: "160"}, and {time: "9:30", evaluation value: "450"} as the evaluation values for each time in the designated range corresponding to the flame in the video data of a burner of the manufacturing process of the plant, and monitors the state in which the temperature of the flame of the burner increases with time. Note that details of the evaluation value calculation processing will be described below in (1-3. Evaluation Value Calculation Processing of Process Monitoring System 100).

### 1-2-4. Alarm Notification Processing

Fourthly, the server device 10 notifies the operator O of an alarm (Step S4). For example, when the calculated evaluation value exceeds a threshold set by the operator O, the server device 10 transmits alarm data indicating an abnormality state to the operator terminal 20 and causes an alarm to be displayed on a monitor screen of the operator terminal 20. In addition, the server device 10 can transmit table data or graph data indicating the evaluation value to the operator terminal 20 and display a table or a graph (example: line graph, histogram) of the evaluation value on the monitor screen of the operator terminal 20.

### 1-3. Evaluation Value Calculation Processing of Process Monitoring System 100

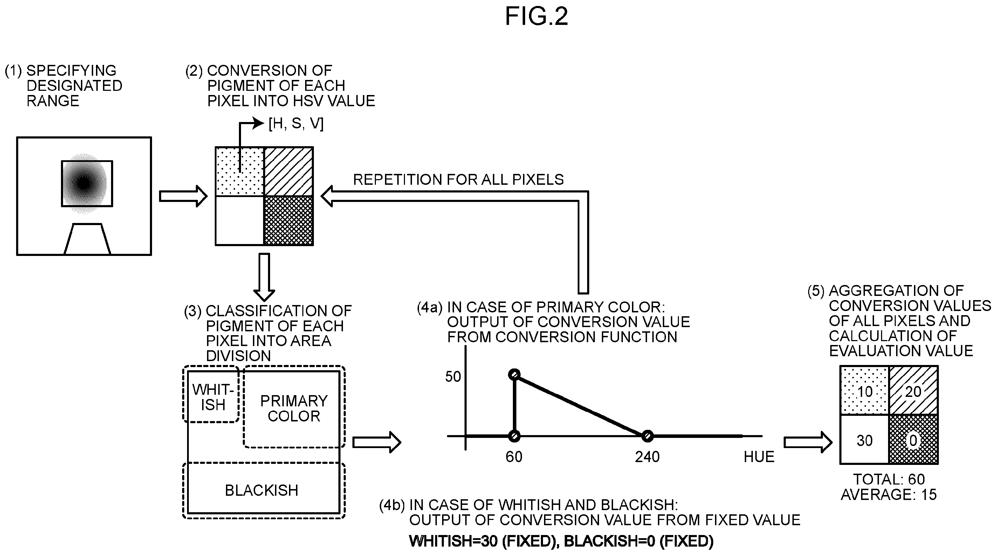

The evaluation calculation processing of the process monitoring system 100 according to the embodiment will be described with reference to FIG. 2. FIG. 2 is a diagram illustrating a processing example of evaluation calculation processing of the process monitoring system 100 according to the embodiment. Hereinafter, designated range specifying processing, HSV value conversion processing, area division classification processing, conversion value output processing, and conversion value aggregation processing will be described.

### 1-3-1. Designated Range Specifying Processing

Firstly, the server device 10 specifies a designated range of the video data (see FIG. 2(1)). In the example of FIG. 2(1), the server device 10 specifies the designated range corresponding to the flame in the video data of the burner of the manufacturing process of the plant set by the operator O via the setting screen of the operator terminal 20.

### 1-3-2. HSV Value Conversion Processing

Secondly, the server device 10 converts the pigment (color information) of each pixel included in the designated range of the video data into the HSV value (see FIG. 2(2)). In the example of FIG. 2(2), the server device 10 converts the pigment (example: light blue, red, white, black) of each pixel included in the designated range corresponding to the flame in the video data of the burner of the manufacturing process of the plant into the HSV value that is a combination of the hue (Hue) that is the numerical value (0 to 360°) indicating the difference in color, the saturation (Saturation) that is the numerical value (0 to 255) indicating the purity, and the value (Value) that is the numerical value (0 to 255) indicating the brightness.

### 1-3-3. Area Division Classification Processing

Thirdly, the server device 10 classifies the pigment (color information) of each pixel included in the designated range of the video data into the area division (see FIG. 2(3)). In the example of FIG. 2(3), the server device 10 classifies light blue and red into the primary color area, classifies white into the whitish area, and classifies black into the blackish area for the pigments of light blue (shading), red (hatching line), white (plain), and black (diamond mesh).

### 1-3-4. Conversion Value Output Processing

Fourthly, the server device 10 outputs the conversion value of each pixel by using the conversion information set according to the area division (see FIGS. 2(4a) and 2(4b)). In the example of FIG. 2(4a), the server device 10 outputs the conversion value using a conversion function that is an equation between the hue indicating the conversion value corresponding to the hue (0 to 360°) and the conversion value as the conversion information for light blue and red classified into the primary color area. In addition, in the example of FIG. 2(4b), the server device 10 outputs the conversion value for white classified into the whitish area using the fixed value "30" of the pigment classified into the whitish area as the conversion information. In addition, in the example of FIG. 2(4b), the server device 10 outputs the conversion value for black classified into the blackish area using the fixed value "0" of the pigment classified into the blackish area as the conversion information. As described above, the server device 10 repeats the HSV value conversion processing, the area division classification processing, and the conversion value output processing for all the pixels included in the designated range of the video data.

### 1-3-5. Conversion Value Aggregation Processing

Fifthly, the server device 10 aggregates the conversion values of all the pixels to calculate an evaluation value (see FIG. 2(5)). In the example of FIG. 2(5), the server device 10 aggregates conversion value "10" of light blue (shading), conversion value "20" of red (hatching line), conversion value "30" of white (plain), and conversion value "0" of black (diamond mesh), and calculates "60" that is the total value of all the pixels as the evaluation value. In addition, in the example of FIG. 2(5), the server device 10 aggregates conversion value "10" of light blue (shading), conversion value "20" of red (hatching line), conversion value "30" of white (plain), and conversion value "0" of black (diamond mesh), and calculates "15" that is the average value of all the pixels as the evaluation value.

### 1-3-6. Others

The server device 10 can further convert the calculated evaluation value into a numerical value desired by the operator O. For example, in order to convert the evaluation value into a numerical value corresponding to the temperature of the flame of the burner of the manufacturing process of the plant, the server device 10 can also convert the value into temperature "450 °C" of the flame by multiplying average value "15" of all the pixels calculated as the evaluation value by predetermined coefficient "30".

### 1-4. Effects of Process Monitoring System 100

Hereinafter, problems of a process monitoring system 100P according to reference art will be described, and then effects of the process monitoring system 100 will be described.

### 1-4-1. Problems of Process Monitoring System 100P

In the process monitoring system 100P according to the reference art, a camera 30 such as a monitoring camera is used for the purpose of monitoring a transition and a state of a manufacturing process of a plant, checking the presence or absence of occurrence of abnormality, and the like. At this time, an operator O can monitor a video captured by the camera 30 in real time or can look back the video stored in a storage device later. In addition, the process monitoring system 100P can also use artificial intelligence (AI) to determine whether the state is in a normal state or an abnormality state.

However, the process monitoring system 100P has the problems described below. Firstly, with the process monitoring system 100P, in the case of monitoring in real time, it is necessary for the operator O to monitor the video and check the state, and therefore, when it is required that there is no oversight, the burden on the operator O increases. Secondly, in the case of checking the video stored in the storage device, there is no risk that the operator O overlooks the state, but since it is necessary to look back the video later, the burden on the operator O increases. Thirdly, in a case where AI is used, it is necessary to cause the AI to learn a normal state or an abnormality state in the corresponding manufacturing process, and the burden on the operator O increases.

### 1-4-2. Outline of Process Monitoring System 100

In the process monitoring system 100, the processing described below is executed. Firstly, the server device 10 receives the setting information including the designated range, the area division, the conversion information, and the like from the operator O. Secondly, the server device 10 acquires video data of a still image or a moving image from the camera 30 installed in the manufacturing process of the plant. Thirdly, the server device 10 calculates an evaluation value for evaluating the state of the manufacturing process of the plant using the setting information set by the operator O and the video data acquired from the camera 30. Fourthly, when the calculated evaluation value exceeds the threshold set by the operator O, the server device 10 notifies the operator O of an alarm indicating an abnormality state.

By executing the processing described above, the process monitoring system 100 can provide a mechanism for converting color information in a monitoring target video into a numerical value desired by the operator O. In addition, the process monitoring system 100 can perform labeling (the area to be monitored is finely divided and managed with a name that can be identified) regarding the state of the monitoring target in units of designated ranges set by the operator O instead of the entire video.

### 1-4-3. Effect of Process Monitoring System 100

The process monitoring system 100 has the effects described below. Firstly, in the process monitoring system 100, the operator O can grasp the color change and the change in size (spread) in the designated range set by the operator O in time series by displaying the transition of numerical value data as a trend. Secondly, in the process monitoring system 100, the operator O can grasp the state of the manufacturing process of the plant by the magnitude of the numerical value without checking the video of the camera 30.

As described above, the process monitoring system 100 can effectively grasp the state of the monitoring target.

### 2. Configuration and Processing of Each Device of Process Monitoring System 100

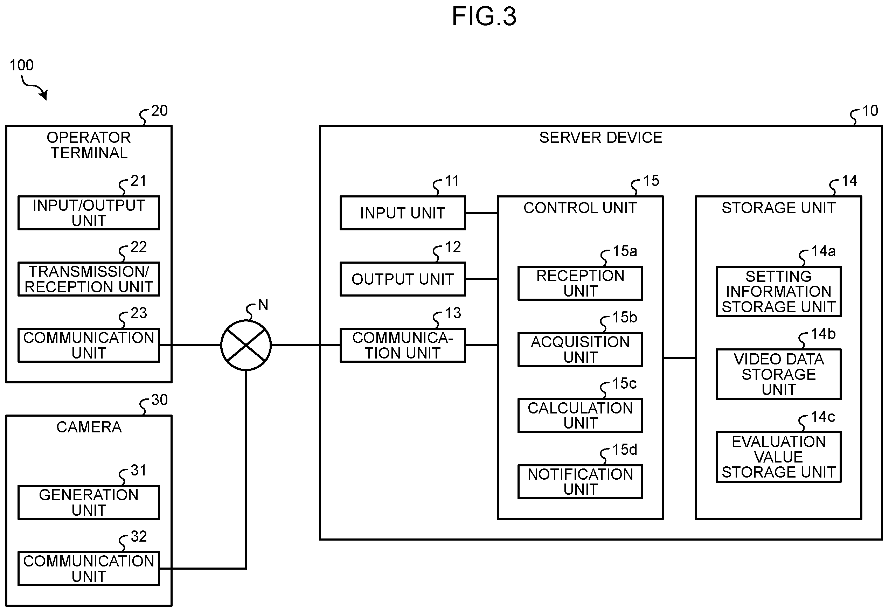

A configuration and processing of each device included in the process monitoring system 100 illustrated in FIG. 1 will be described with reference to FIG. 3. FIG. 3 is a block diagram illustrating a configuration example of each device of the process monitoring system 100 according to the embodiment. Hereinafter, a configuration example and a processing example of the server device 10, a configuration example and a processing example of the operator terminal 20, and a configuration example and a processing example of the camera 30 will be described in detail after a configuration example of the entire process monitoring system 100 according to the embodiment is described.

### 2-1. Configuration Example of Entire Process Monitoring System 100

A configuration example of the entire process monitoring system 100 illustrated in FIG. 1 will be described with reference to FIG. 3. As illustrated in FIG. 3, the process monitoring system 100 includes the server device 10, the operator terminal 20, and the camera 30. In addition, the server device 10, the operator terminal 20, and the camera 30 are communicably connected by a communication network N achieved by the Internet, a dedicated line, or the like.

The server device 10 is installed in a cloud environment, an on-premises environment, an edge environment, or the like. In addition, the operator terminal 20 is installed in a monitoring room of a facility or equipment managed by the operator O. In addition, the camera 30 is installed at a monitoring target base that is a monitoring site of a facility or equipment.

### 2-2. Configuration Example and Processing Example of Server Device 10

A configuration example and a processing example of the server device 10 will be described with reference to FIG. 3. The server device 10 is an information providing apparatus, and includes an input unit 11, an output unit 12, a communication unit 13, a storage unit 14, and a control unit 15.

### 2-2-1. Input Unit 11

The input unit 11 takes charge of inputting various types of information to the server device 10. For example, the input unit 11 is achieved by a mouse, a keyboard, or the like, and receives an input of various types of information to the server device 10.

### 2-2-2. Output Unit 12

The output unit 12 takes charge of outputting various types of information from the server device 10. For example, the output unit 12 is achieved by a display or the like, and displays various types of information stored in the server device 10.

### 2-2-3. Communication Unit 13

The communication unit 13 takes charge of data communication with other devices. For example, the communication unit 13 performs data communication with each communication device via a router or the like. In addition, the communication unit 13 can perform data communication with a terminal of an operator, which is not illustrated.

### 2-2-4. Storage Unit 14

The storage unit 14 stores various types of information referred to when the control unit 15 operates and various types of information acquired when the control unit 15 operates. The storage unit 14 includes a setting information storage unit 14a, a video data storage unit 14b, and an evaluation value storage unit 14c. Here, the storage unit 14 can be achieved by, for example, a semiconductor memory element such as random access memory (RAM) or flash memory, a storage device such as a hard disk or an optical disk, or the like. Note that, in the example of FIG. 3, the storage unit 14 is installed inside the server device 10, but may be installed outside the server device 10, or a plurality of storage units may be installed.

### 2-2-4-1. Setting Information Storage Unit 14a

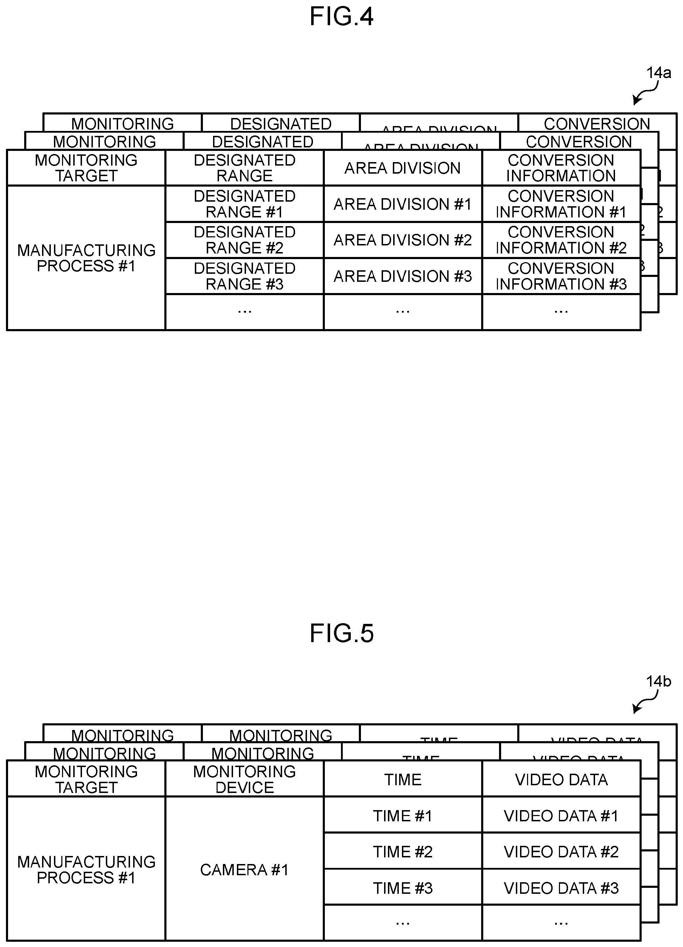

The setting information storage unit 14a stores setting information. For example, the setting information storage unit 14a stores setting information received by a reception unit 15a of the control unit 15 to be described below. Here, an example of data stored in the setting information storage unit 14a will be described with reference to FIG. 4. FIG. 4 is a diagram illustrating an example of the setting information storage unit 14a of the server device 10 according to the embodiment. In the example of FIG. 4, the setting information storage unit 14a includes items such as "monitoring target", "designated range", "area division", and "conversion information".

"Monitoring target" indicates identification information for identifying a facility, equipment, or section for evaluating a state, and is, for example, an identification number or an identification symbol of a manufacturing process of a plant. "Designated range" indicates a range set by the user and including each pixel for calculating the evaluation value in the video data, and is, for example, a range designated by the operator O on the setting screen and surrounded by an arbitrary shape in addition to a rectangle, a circle, a fan, and a polygon in the video. "Area division" indicates a division for classifying the pigment of the pixel in the video data set by the user, and is, for example, a division of color information such as the primary color area, the whitish area, and the blackish area defined by the maximum value or the minimum value of saturation or value input on the setting screen by the operator O. "Conversion information" indicates a conversion value corresponding to the color information set by the user, and is, for example, information such as a conversion table or a conversion function indicating each conversion value corresponding to each hue in the color information of the primary color area, or a fixed value in the color information of the whitish area or the blackish area, input by the operator O on the setting screen.

That is, FIG. 4 illustrates an example in which data of {designated range: "designated range #1", area division: "area division #1", conversion information: "conversion information #1"}, {designated range: "designated range #2", area division: "area division #2", conversion information: "conversion information #2"}, {designated range: "designated range #3", area division: "area division #3", conversion information: "conversion information #3"},... are stored in the setting information storage unit 14a for monitoring target "manufacturing process #1".

### 2-2-4-2. Video Data Storage Unit 14b

The video data storage unit 14b stores video data. For example, the video data storage unit 14b stores video data acquired by an acquisition unit 15b of the control unit 15 to be described below. Here, an example of data stored in the video data storage unit 14b will be described with reference to FIG. 5. FIG. 5 is a diagram illustrating an example of the video data storage unit 14b of the server device 10 according to the embodiment. In the example of FIG. 5, the video data storage unit 14b includes items such as "monitoring target", "monitoring device", "time", and "video data".

"Monitoring target" indicates identification information for identifying a facility, equipment, or section for evaluating a state, and is, for example, an identification number or an identification symbol of a manufacturing process of a plant. "Monitoring device" indicates identification information for identifying an imaging device, and is, for example, an identification number or an identification symbol of the camera 30 that is a monitoring camera of the manufacturing process the plant. "Time" indicates an imaging time by the imaging device, and is indicated by, for example, year, month, day, hour, minute, and second. "Video data" indicates video data at an imaging time, and is, for example, video data of a still image, video data of a moving image, video data of a moving image including audio data, and the like acquired every one second.

That is, FIG. 5 illustrates an example in which data of {time: "time #1", video data: "video data #1"}, {time: "time #2", video data: "video data #2"}, {time: "time #3", video data: "video data #3"},... are stored in the video data storage unit 14b for monitoring target "manufacturing process #1" and the camera 30 that is a monitoring device identified by "camera #1".

### 2-2-4-3. Evaluation Value Storage Unit 14c

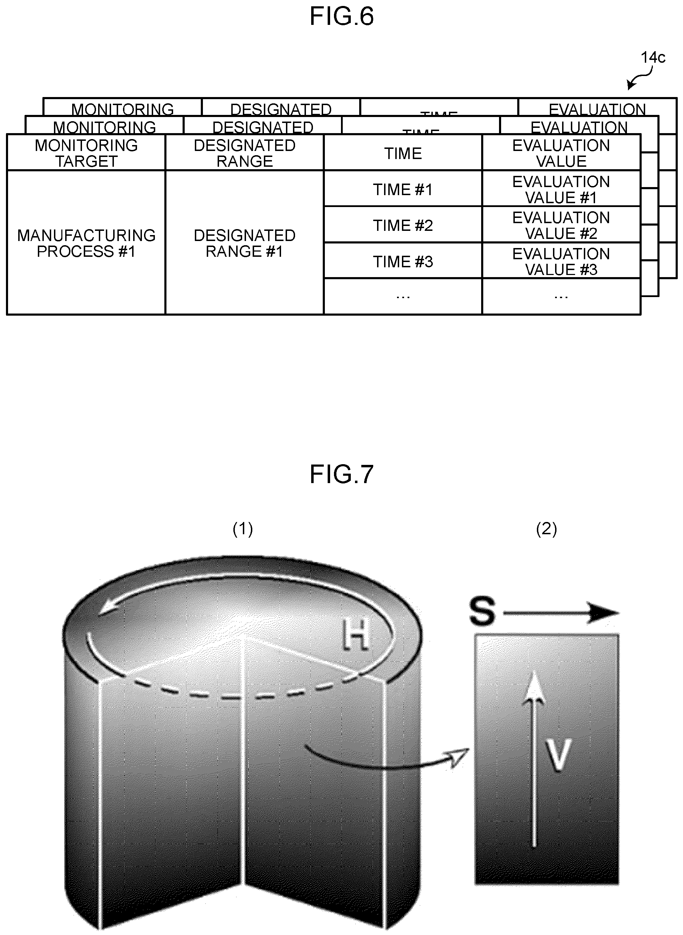

The evaluation value storage unit 14c stores an evaluation value. For example, the evaluation value storage unit 14c stores an evaluation value calculated by a calculation unit 15c of the control unit 15 to be described below. Here, an example of data stored in the evaluation value storage unit 14c will be described with reference to FIG. 6. FIG. 6 is a diagram illustrating an example of the evaluation value storage unit 14c of the server device 10 according to the embodiment. In the example of FIG. 6, the evaluation value storage unit 14c includes items such as "monitoring target", "designated range", "time", and "evaluation value".

"Monitoring target" indicates identification information for identifying a facility, equipment, or section for evaluating a state, and is, for example, an identification number or an identification symbol of a manufacturing process of a plant. "Designated range" indicates a range set by the user and including each pixel for calculating the evaluation value in the video data, and is, for example, a range designated by the operator O on the setting screen and surrounded by an arbitrary shape in addition to a rectangle, a circle, a fan, and a polygon in the video. "Time" indicates an imaging time by the imaging device, and is indicated by, for example, year, month, day, hour, minute, and second. "Evaluation value" indicates a numerical value for evaluating the state of the monitoring target, and is, for example, a numerical value corresponding to the temperature of the flame of the burner of the manufacturing process of the plant, a numerical value indicating danger and safety, or the like.

That is, FIG. 6 illustrates an example in which data of {time: "time #1", evaluation value: "evaluation value #1"}, {time: "time #2", evaluation value: "evaluation value #2"}, {time: "time #3", evaluation value: "evaluation value #3"},... are stored in the evaluation value storage unit 14c for monitoring target "manufacturing process #1" and the designated range of the evaluation value identified by "designated range #1".

### 2-2-5. Control Unit 15

The control unit 15 takes charge of control of the entire server device 10. The control unit 15 includes the reception unit 15a, the acquisition unit 15b, the calculation unit 15c, and a notification unit 15d. Here, the control unit 15 can be achieved by, for example, an electronic circuit such as a central processing unit (CPU) or a micro processing unit (MPU), or an integrated circuit such as an application specific integrated circuit (ASIC) or a field programmable gate array (FPGA).

### 2-2-5-1. Reception Unit 15a

The reception unit 15a receives various types of information. Note that the reception unit 15a stores the received various types of information in the storage unit 14. The setting information reception processing (designated range reception processing, area division reception processing, and conversion information reception processing) will be described below.

### Setting Information Reception Processing

The reception unit 15a executes the setting information reception processing. For example, the reception unit 15a receives, as the setting information, the designated range, the area division, and the conversion information set on the setting screen of the user terminal of the user.

A specific example of the setting information reception processing will be described. The reception unit 15a receives {designated range: "designated range #1", area division: "area division #1", conversion information: "conversion information #1"}, {designated range: "designated range #2", area division: "area division #2", conversion information: "conversion information #2"}, {designated range: "designated range #3", area division: "area division #3", conversion information: "conversion information #3"},... as setting information set by the operator O managing monitoring target "manufacturing process #1" via the operator terminal 20, and stores the setting information in the setting information storage unit 14a.

### Designated Range Reception Processing

The reception unit 15a executes the designated range reception processing as the setting information reception processing. For example, the reception unit 15a receives the designated range of the video data. In addition, the reception unit 15a receives the designated range by the operation of the user on the video displayed on the setting screen of the user terminal of the user.

### Area Division Reception Processing

The reception unit 15a executes the area division reception processing as the setting information reception processing. For example, the reception unit 15a receives the area division indicating the primary color area, the whitish area, and the blackish area. In addition, the reception unit 15a receives the area division by the user inputting saturation and value on the setting screen of the user terminal of the user.

### Conversion Information Reception Processing

The reception unit 15a executes the conversion information reception processing as the setting information reception processing. For example, the reception unit 15a receives conversion information (conversion table, conversion function, fixed value) indicating a conversion value corresponding to the color information. In addition, the reception unit 15a receives conversion information including each conversion value corresponding to each hue. In addition, the reception unit 15a receives conversion information including each conversion value corresponding to each saturation. In addition, the reception unit 15a receives conversion information including each conversion value corresponding to each value. Hereinafter, a conversion table, a conversion function, and a fixed value will be described as the conversion information.

### Conversion Table

The reception unit 15a receives a conversion table indicating a relationship between each hue and each conversion value as conversion information. For example, the reception unit 15a receives a conversion table capable of converting each hue of 0 to 360° into each conversion value. At this time, the reception unit 15a can also receive a conversion table capable of converting each saturation or each value into each conversion value.

### Conversion Function

The reception unit 15a receives a conversion function indicating a relationship between each hue and each conversion value as conversion information. For example, the reception unit 15a receives a conversion function indicating a straight line equation between predetermined hues. In addition, the reception unit 15a receives a conversion function indicating a curve equation between predetermined hues. At this time, the reception unit 15a can also receive a conversion function indicating a straight line equation or a curve equation between predetermined saturations and predetermined values.

### Fixed Value

The reception unit 15a receives a fixed value defined by the area division as the conversion information. For example, the reception unit 15a receives a fixed value corresponding to the pigment of the pixel classified into the whitish area as the area division. **In** addition, the reception unit 15a receives a fixed value corresponding to the pigment of the pixel classified into the blackish area as the area division. At this time, the reception unit 15a can also receive a fixed value corresponding to the pigment of the pixel classified into the primary color area as the area division.

### 2-2-5-2. Acquisition Unit 15b

The acquisition unit 15b acquires various types of information. Note that the acquisition unit 15b stores the acquired various types of information in the storage unit 14. The video data acquisition processing will be described below.

### Video Data Acquisition Processing

The acquisition unit 15b executes the video data acquisition processing. For example, the acquisition unit 15b acquires video data of a monitoring target captured by the camera 30 that is an imaging device. In addition, the acquisition unit 15b acquires still image data or moving image data output by the camera 30 installed in the manufacturing process of the plant.

### A specific example of the video data acquisition processing will be described.

The acquisition unit 15b acquires video data of {time: "time #1", video data: "video data #1"}, {time: "time #2", video data: "video data #2"}, {time: "time #3", video data: "video data #3"},... as video data generated by the camera 30 that is the monitoring device identified by "camera #1" installed in monitoring target "manufacturing process #1" and transmitted to the server device 10, and stores the video data in the video data storage unit 14b.

### 2-2-5-3. Calculation Unit 15c

The calculation unit 15c calculates various types of information. Note that the calculation unit 15c refers to various types of information stored by the storage unit 14. **In** addition, the calculation unit 15c stores the calculation result in the storage unit 14. The evaluation value calculation processing will be described below.

### Evaluation Value Calculation Processing

The calculation unit 15c executes the evaluation value calculation processing. For example, the calculation unit 15c calculates an evaluation value for evaluating the state of the monitoring target on the basis of the received conversion information (conversion table, conversion function, fixed value) and the acquired video data.

The calculation unit 15c calculates the evaluation value using each conversion value corresponding to the color information of each pixel of the video data included in the designated range. For example, the calculation unit 15c calculates the evaluation value using each conversion value corresponding to each hue of each pixel of the video data included in the designated range. At this time, the calculation unit 15c can also calculate the evaluation value using each conversion value corresponding to each saturation or each value of each pixel of the video data included in the designated range.

The calculation unit 15c calculates the evaluation value using the conversion information set according to the area division. For example, the calculation unit 15c calculates the evaluation value using the conversion table or the conversion function as the conversion information with respect to the pigment of the pixel classified into the primary color area as the area division. In addition, the calculation unit 15c calculates the evaluation value using the fixed value as the conversion information with respect to the pigment of the pixel classified into the whitish area or the blackish area as the area division.

The calculation unit 15c calculates the evaluation value using each conversion value corresponding to each hue of each pixel of the video data converted by the conversion function. For example, the calculation unit 15c calculates the evaluation value using each conversion value corresponding to each hue of each pixel of the video data converted by the conversion function indicating a straight line equation or a curve equation.

The calculation unit 15c calculates, as the evaluation value, a total value of conversion values corresponding to hues of pixels of the video data. In addition, the calculation unit 15c calculates, as the evaluation value, an average value of conversion values corresponding to hues of pixels of the video data. Further, the calculation unit 15c can also convert the calculated total value or average value into a numerical value desired by the user by using a predetermined coefficient set by the user as the evaluation value.

A specific example of the evaluation value calculation processing will be described. Firstly, the calculation unit 15c refers to {designated range: "designated range #1", area division: "area division #1", conversion information: "conversion information #1"} stored in the setting information storage unit 14a. Secondly, the calculation unit 15c refers to {time: "time #1", video data: "video data #1"}, {time: "time #2", video data: "video data #2"}, and {time: "time #3", video data: "video data #3"} stored in the video data storage unit 14b. Thirdly, the calculation unit 15c calculates {time: "time #1", evaluation value: "evaluation value #1"}, {time: "time #2", evaluation value: "evaluation value #2"}, and {time: "time #3", evaluation value: "evaluation value #3"} as the evaluation values and stores the evaluation values in the evaluation value storage unit 14c.

### 2-2-5-4. Notification Unit 15d

The notification unit 15d gives a notification of various types of information. Note that the notification unit 15d may acquire various types of information from the storage unit 14. Hereinafter, the alarm notification processing and evaluation value notification processing will be described.

### Alarm Notification Processing

The notification unit 15d executes the alarm notification processing. For example, when the calculated evaluation value exceeds a threshold, the notification unit 15d notifies the user of an alarm indicating abnormality of the monitoring target.

A specific example of the alarm notification processing will be described. When evaluation value "evaluation value #3" calculated by the calculation unit 15c exceeds the threshold, the notification unit 15d transmits "abnormality alarm #1" to the operator terminal 20 as alarm data indicating an abnormality state of monitoring target "manufacturing process #1", and notifies the operator O of the alarm indicated by "abnormality alarm #1" by causing the display of the operator terminal 20 to display the alarm.

### Evaluation Value Notification Processing

The notification unit 15d executes the evaluation value notification processing. For example, the notification unit 15d notifies the user of a table or a graph indicating the calculated evaluation value. At this time, the notification unit 15d gives a notification of a table indicating the evaluation value for each imaging time as a table indicating the calculated evaluation value. In addition, the notification unit 15d gives a notification of a line graph indicating the evaluation value for each imaging time, a histogram indicating the distribution of the conversion value and the evaluation value, and the like as a graph indicating the calculated evaluation value.

A specific example of the evaluation value notification processing will be described. Firstly, the notification unit 15d refers to {time: "time #1", evaluation value: "evaluation value #1"}, {time: "time #2", evaluation value: "evaluation value #2"}, and {time: "time #3", evaluation value: "evaluation value #3"} stored in the evaluation value storage unit 14c. Secondly, the notification unit 15d generates table data "tables #1 to #3" indicating evaluation values for each imaging time, line graph data "line graphs #1 to #3" indicating evaluation values for each imaging time, and histogram data "histograms #1 to #3" indicating the distribution of the conversion value and the evaluation value. Thirdly, the notification unit 15d transmits "tables #1 to #3", "line graphs #1 to #3", and "histograms #1 to #3" to the operator terminal 20, and notifies the operator O of the tables indicated by "tables #1 to #3", the line graphs indicated by "line graphs #1 to #3", and the histograms indicated by "histograms #1 to #3" by displaying them on the display of the operator terminal 20.

### 2-3. Configuration Example and Processing Example of Operator Terminal 20

A configuration example and a processing example of the operator terminal 20 will be described again with reference to FIG. 3. The operator terminal 20 includes an input/output unit 21, a transmission/reception unit 22, and a communication unit 23.

### 2-3-1. Input/Output Unit 21

The input/output unit 21 takes charge of inputting various types of information to the operator terminal 20. For example, the input/output unit 21 is achieved by a mouse, a keyboard, a touch panel, or the like, and receives an input of various types of information to the operator terminal 20. In addition, the input/output unit 21 takes charge of displaying various types of information from the operator terminal 20. For example, the input/output unit 21 is achieved by a display or the like, and displays various types of information stored in the operator terminal 20.

In addition, the input/output unit 21 displays a setting screen enabling input of setting information by operation of the operator O. In addition, the input/output unit 21 displays an alarm indicated by alarm data transmitted from the server device 10 that is an information providing apparatus. In addition, the input/output unit 21 displays a table indicated by the table data or a graph indicated by the graph data transmitted from the server device 10.

### 2-3-2. Transmission/Reception Unit 22

The transmission/reception unit 22 transmits various types of information. For example, the transmission/reception unit 22 transmits the setting information input by the operator O via the setting screen to the server device 10.

The transmission/reception unit 22 receives various types of information. For example, the transmission/reception unit 22 receives alarm data transmitted from the server device 10. In addition, the transmission/reception unit 22 receives table data or graph data transmitted from the server device 10.

### 2-3-3. Communication Unit 23

The communication unit 23 takes charge of data communication with other devices. For example, the communication unit 23 performs data communication with each communication device via a router or the like. In addition, the communication unit 23 can perform data communication with a terminal of an operator, which is not illustrated.

### 2-4. Configuration Example and Processing Example of Camera 30

A configuration example and a processing example of the camera 30 will be described again with reference to FIG. 3. For example, the camera 30 is achieved by the camera 30 that is an imaging device such as a monitoring camera or a security camera installed in a facility or the like managed by the operator O, and includes a generation unit 31 and a communication unit 32.

### 2-4-1. Generation Unit 31

The generation unit 31 generates the video data. For example, the generation unit 31 generates video data of a still image or a moving image by imaging the inside of the facility every one second.

The generation unit 31 transmits the generated video data to the server device 10. For example, the generation unit 31 transmits the generated video data of a still image or a moving image to the server device 10.

### 2-4-2. Communication Unit 32

The communication unit 32 takes charge of data communication with other devices. For example, the communication unit 32 performs data communication with each communication device via a router or the like. In addition, the communication unit 32 can perform data communication with a terminal, which is not illustrated.

### 3. Specific Example of Each Processing of Process Monitoring System 100

A specific example of each processing of the process monitoring system 100 according to the embodiment will be described with reference to FIGS. 7 to 16. Hereinafter, a basic principle of an HSV model that is one of color models used in the process monitoring system 100 will be described, and then Specific Examples 1 to 4 of each processing of the process monitoring system 100 will be described.

### 3-1. Basic Principle of HSV Model

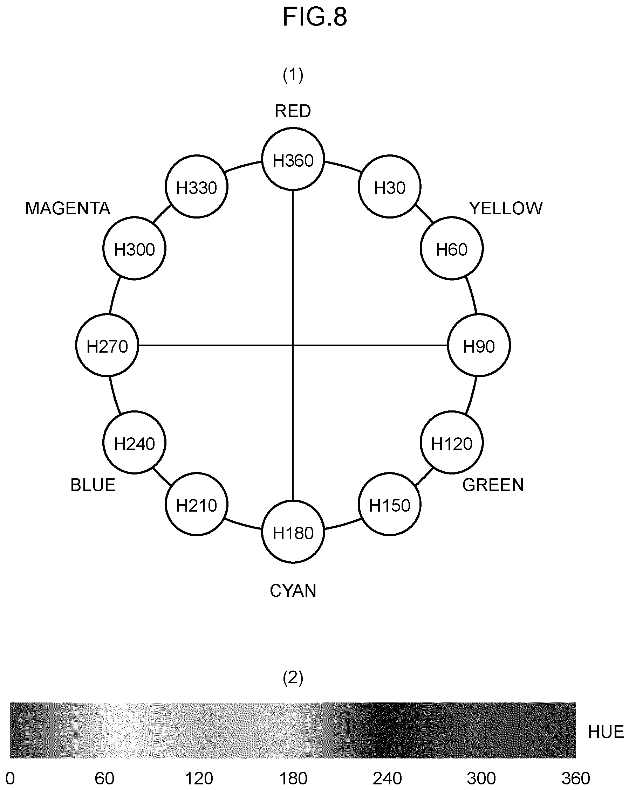

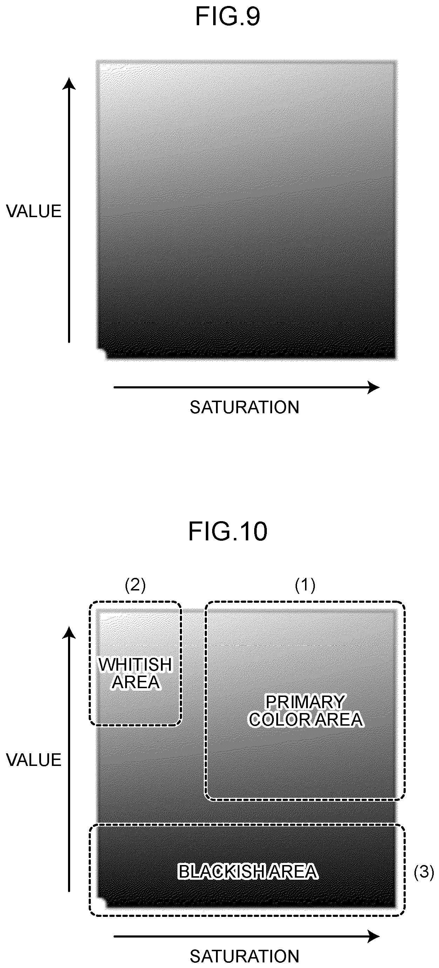

Here, the basic principle of the HSV model used in the process monitoring system 100 will be described with reference to FIGS. 7 to 9. FIG. 7 is a diagram for describing an entire HSV model used in the process monitoring system 100 according to the embodiment. FIG. 8 is a diagram for describing a hue of the HSV model used in the process monitoring system 100 according to the embodiment. FIG. 9 is a diagram for describing saturation and value of the HSV model used in the process monitoring system 100 according to the embodiment. Hereinafter, the premise of the color model used in the process monitoring system 100 will be described, and then the elements of the HSV model will be described.

### 3-1-1. Premise of Color Model

A premise of the color model used in the process monitoring system 100 will be described. Firstly, the color model used in the process monitoring system 100 is desirably a color model that can be intuitively used by a person. For example, a person can easily designate and distinguish colors such as red and purple, but it is difficult to recognize colors such as (R255, B0, G0) and (C150, M200, Y0). Therefore, the color model used in the process monitoring system 100 desirably matches human senses (daily familiar senses) as much as possible.

Here, an RGB model, which is a general color model, will be described as color representation in a computer. The RGB model is a color model that expresses a wide range of colors by additive color mixing in which the amounts of three primary colors of red (R), green (G), and blue (B) are adjusted and mixed, and easily generates light on a display or the like. On the other hand, in the RGB model, since there are about 16.77 million patterns as a combination (RGB value) of red (R), green (G), and blue (B), it is difficult for a person to estimate or designate an RGB value by looking at the color.

Secondly, it is desirable that a numerical value of the color model used in the process monitoring system 100 does not greatly change due to an influence of a solar radiation amount and illumination. For example, in an actual monitoring site, the same color is not always obtained due to an influence of a light amount of the sun and illumination, and thus, in a color model in which a conversion value greatly differs due to a difference in light amount, it is difficult to perform a comparison using numerical values. Therefore, in the color model used in the process monitoring system 100, it is desirable that the conversion value does not greatly fluctuate even when the amount of light is slightly different.

As described above, the color model used in the process monitoring system 100 is desirably an HSV model that satisfies the conditions of "being close to human intuition and easy to use" and "being hardly affected by brightness or the like". Note that the same applies to the HSB model.

### 3-1-2. Elements of HSV Model

Elements of the HSV model used in the process monitoring system 100 will be described. The HSV model is a color model that expresses a color by a combination of three numerical values of hue (Hue), saturation (Saturation), and value (Value). The HSV model is closer to human senses than the RGB model in which a color is determined by a combination of primary colors, and has a feature that an imagined color is easily conveyed.

As indicated by "H" in FIG. 7(1), the hue indicates the circumference of a cylinder of the HSV model and is represented by 0 to 360°. In addition, as indicated by "S" in FIG. 7(2), the saturation indicates a distance from the center of the circle to the circumference of the cylinder of the HSV model, and is represented by 0 to 255. In addition, as indicated by "V" in FIG. 7(2), the value indicates a height from the bottom surface to the top surface of the cylinder of the HSV model, and is represented by 0 to 255.

As illustrated in FIG. 8(1), the hue is represented by a color wheel in which "H60" corresponds to "yellow", "H120" corresponds to "green", "H180" corresponds to "cyan", "H240" corresponds to "blue", "H300" corresponds to "magenta", and "H360" ("H0") corresponds to "red". In addition, as illustrated in FIG. 8(2), the hue is represented by a color scale indicating a scale of 0 to 360° and corresponding colors.

As illustrated in FIG. 9, the saturation and the value are represented on a two-dimensional scale indicating colors corresponding to scales of 0 to 255. Here, the higher the saturation and the higher the value, the closer to the primary color. In addition, the lower the saturation and the higher the value, the closer to white. In addition, the lower the value, the closer to black.

### 3-2. Specific Example 1

Here, Specific Example 1 of each processing of the process monitoring system 100 will be described with reference to FIG. 10. FIG. 10 is a diagram illustrating Specific Example 1 of each processing of the process monitoring system 100 according to the embodiment. Hereinafter, the premise of the HSV model used in the process monitoring system 100 will be described, and then a specific example of the area division classification processing executed by the server device 10 of the process monitoring system 100 will be described.

### 3-2-1. Premise of HSV Model

A premise of the HSV model used in the process monitoring system 100 will be described. Firstly, in the HSV model, any hue becomes blackish when the value is low. Secondly, in the HSV model, any hue becomes whitish when the saturation is low and the value is high. Thirdly, in the HSV model, since there are no white and black in the color wheel, "white" or "black" cannot be selected.

### 3-2-2. Area Division

The area division based on the HSV model used in the process monitoring system 100 will be described. On the basis of the above premise, the server device 10 classifies the area division into three: the "primary color area", the "whitish area", and the "blackish area" according to the saturation and the value. In addition, the server device 10 sets the conversion information according to each classified area division. Hereinafter, the conversion information of the area division of the primary color area, the whitish area, and the blackish area will be described.

### 3-2-2-1. Primary Color Area

The conversion information of the area division of the primary color area will be described. As illustrated in the example of FIG. 10(1), the server device 10 classifies the pigment having predetermined saturation or more and exhibiting predetermined value or more into the primary color area. At this time, the server device 10 uses, as the conversion information, a conversion table capable of converting each hue of 0 to 360° into each conversion value or a conversion function indicating a straight line equation or a curve equation capable of converting the hue between predetermined hues into the conversion value.

### 3-2-2-2. Whitish Area

The conversion information of the area division of the whitish area will be described. As illustrated in the example of FIG. 10(2), the server device 10 classifies the pigment having less than the predetermined saturation and exhibiting the predetermined value or more into the whitish area. At this time, the server device 10 uses the fixed value set for the pigment of the whitish area as the conversion information. Note that the server device 10 can also use a conversion table or a conversion function as the conversion information similarly to the pigment of the primary color area.

### 3-2-2-3. Blackish Area

The conversion information of the area division of the blackish area will be described. As illustrated in the example of FIG. 10(3), the server device 10 classifies the pigment exhibiting less than the predetermined value into the blackish area. At this time, the server device 10 uses the fixed value set for the pigment of the blackish area as the conversion information. Note that the server device 10 can also use a conversion table or a conversion function as the conversion information similarly to the pigment of the primary color area.

### 3-3. Specific Example 2

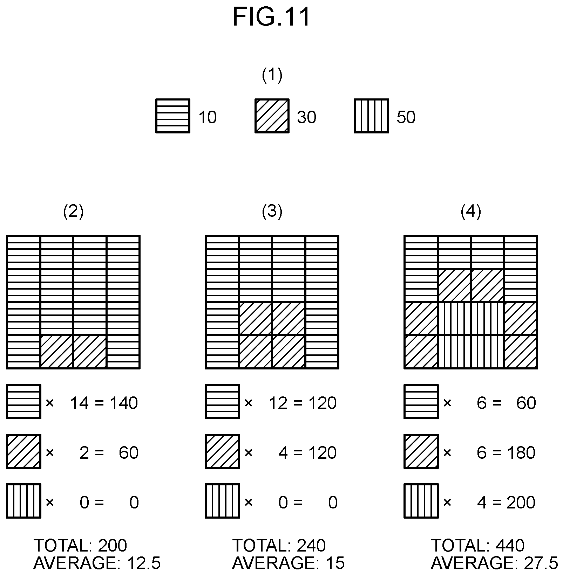

Here, Specific Example 2 of each processing of the process monitoring system 100 will be described with reference to FIG. 11. FIG. 11 is a diagram illustrating Specific Example 2 of each processing of the process monitoring system 100 according to the embodiment. Hereinafter, specific examples of the conversion value output processing and the evaluation value calculation processing executed by the server device 10 of the process monitoring system 100 will be described.

### 3-3-1. Specific Example of Conversion Value Output Processing

A specific example of the conversion value output processing of the process monitoring system 100 will be described. In the example of FIG. 11(1), the server device 10 outputs conversion value "10" using the conversion information with respect to light blue (horizontal line) that is a pigment of the primary color area. In addition, the server device 10 outputs conversion value "30" using the conversion information with respect to yellow (hatching line) that is a pigment of the primary color area. In addition, the server device 10 outputs conversion value "50" using the conversion information with respect to orange (vertical line) that is a pigment of the primary color area.

### 3-3-2. Specific Example of Evaluation Value Calculation Processing

A specific example of the evaluation value calculation processing of the process monitoring system 100 will be described. In the example of FIG. 11(2), among 16 pixels (pigments) included in the designated range, the server device 10 calculates total value "200" and average value "12.5" as the evaluation values because the total of the conversion values of light blue is 10 × 14 = 140, the total of the conversion values of yellow is 30 × 2 = 60, and the total of the conversion values of orange is 50 × 0 = 0.

In the example of FIG. 11(3), among 16 pixels (pigments) included in the designated range, the server device 10 calculates total value "240" and average value "15" as the evaluation values because the total of the conversion values of light blue is 10 × 12 = 120, the total of the conversion values of yellow is 30 × 4 = 120, and the total of the conversion values of orange red is 50 × 0 = 0.

In the example of FIG. 11(4), among 16 pixels (pigments) included in the designated range, the server device 10 calculates total value "440" and average value "27.5" as the evaluation values because the total of the conversion values of light blue is 10 × 6 = 60, the total of the conversion values of yellow is 30 × 6 = 180, and the total of the conversion values of orange is 50 × 4 = 200.

### 3-4. Specific Example 3

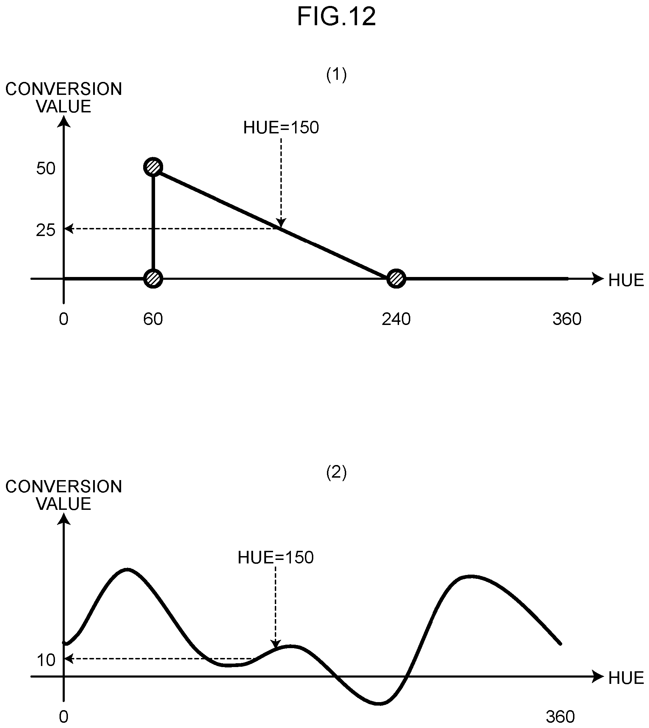

Here, Specific Example 3 of each processing of the process monitoring system 100 will be described with reference to FIG. 12. FIG. 12 is a diagram illustrating Specific Example 3 of each processing of the process monitoring system 100 according to the embodiment. Hereinafter, the premise of the conversion function used in the conversion value output processing executed by the server device 10 of the process monitoring system 100 will be described, and then, a straight line equation and a curve equation will be described as specific examples of the conversion function.

### 3-4-1. Premise of Conversion Function

A premise of the conversion function used in the conversion value output processing of the process monitoring system 100 will be described. In the process monitoring system 100, the operator O needs to set each conversion value corresponding to each hue as the conversion information. However, for example, setting each conversion value for each integer value of the hue of 0 to 360° places a heavy burden on the operator O. Therefore, in the process monitoring system 100, the conversion value can be obtained using the conversion function created by plotting the hue and the conversion value at several points. That is, in the process monitoring system 100, by using the conversion function, setting of the conversion value corresponding to all hues becomes unnecessary, and the burden on the operator O can be further reduced.

### 3-4-2. Specific Example 1 of Conversion Function: Straight Line Equation

As Specific Example 1 of the conversion function used in the conversion value output processing of the process monitoring system 100, a straight line equation will be described. As illustrated in the example of FIG. 12(1), the server device 10 sets a straight line conversion function that indicates hue on the horizontal axis and conversion value on the vertical axis and is capable of converting the hue from 0 to 360° to the conversion value. In the example of FIG. 12(1), the server device 10 outputs conversion value "25" corresponding to hue "150" using a straight line equation.

### 3-4-3. Specific Example 2 of Conversion Function: Curve Equation

As Specific Example 2 of the conversion function used in the conversion value output processing of the process monitoring system 100, a curve equation will be described. As illustrated in the example of FIG. 12(2), the server device 10 sets a curve conversion function that indicates hue on the horizontal axis and conversion value on the vertical axis and is capable of converting the hue from 0 to 360° to the conversion value. In the example of FIG. 12(2), the server device 10 outputs conversion value "10" corresponding to hue "150" using a curve equation.

### 3-5. Specific Example 4

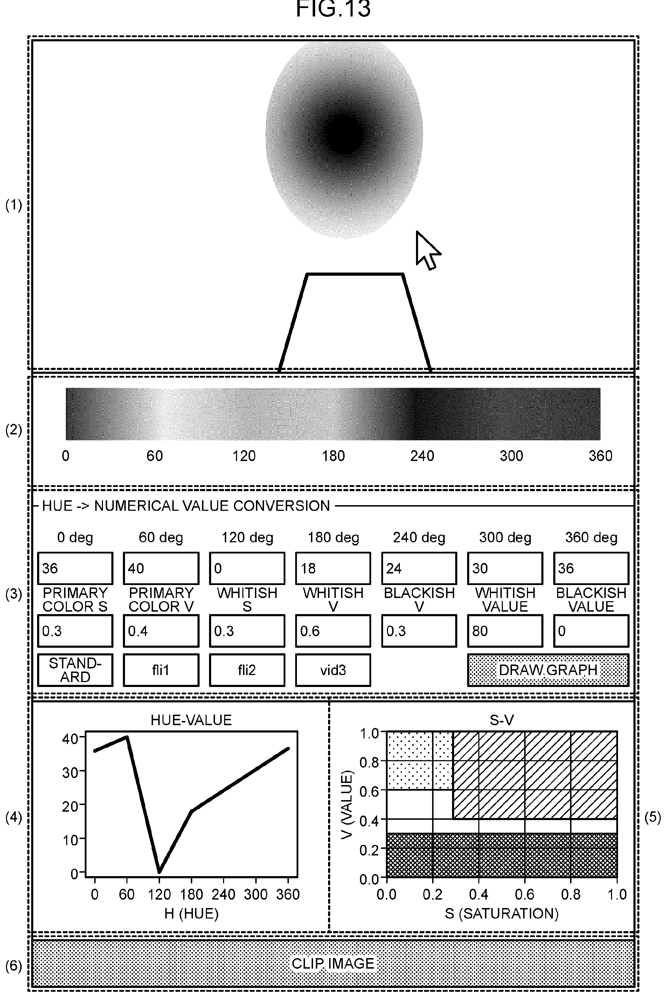

Here, Specific Example 4 of each processing of the process monitoring system 100 will be described with reference to FIGS. 13 to 16. Hereinafter, a specific example of a setting screen displayed by the operator terminal 20 of the process monitoring system 100 will be described.

### 3-5-1. Specific Example 1 of Setting Screen: Entire Setting Screen

Here, Specific Example 1 of the setting screen displayed by the operator terminal 20 will be described with reference to FIG. 13. FIG. 13 is a diagram illustrating Specific Example 4-1 of each processing of the process monitoring system 100 according to the embodiment. A designated range setting screen and a conversion information setting screen/area division setting screen will be described below.

### 3-5-1-1. Designated Range Setting Screen

As illustrated in the example of FIG. 13(1), the operator terminal 20 displays a designated range setting screen that displays a video captured by the camera 30. In the example of FIG. 13(1), the operator terminal 20 displays a video of the vicinity of the burner of the manufacturing process of the plant as the designated range setting screen. At this time, the operator O can designate a predetermined range on the displayed video by surrounding the predetermined range with a pointer, and can set the designated range of the video data by clicking a clip image button (see FIG. 13(6)). Note that details of the designated range setting screen will be described below in (3-5-2. Specific Example 2 of Setting Screen: Designated Range Setting Screen).

### 3-5-1-2. Conversion Information Setting Screen/Area Division Setting Screen

As illustrated in the example of FIG. 13(3), the operator terminal 20 displays a conversion information setting screen/area division setting screen for inputting a conversion value corresponding to color information. In the example of FIG. 13(3), the operator terminal 20 displays, as the conversion information setting screen, conversion value input text boxes to which conversion values can be input and fixed value input text boxes to which fixed values can be input. At this time, the operator O can set the conversion information by inputting a conversion value or a fixed value to each text box. In addition, when inputting the conversion value to each text box, the operator O can also select a hue for which the conversion value is desired to be set on the color scale (see FIG. 13(2)). In addition, the operator O can set the conversion function and display a conversion function graph (see FIG. 13(4)) indicating the conversion function by clicking a "draw graph" button after inputting the conversion value to each text box. Note that details of the conversion information setting screen and the conversion function graph will be described below in (3-5-3. Specific Example 3 of Setting Screen: Conversion Information Setting Screen).

In addition, in the example of FIG. 13(3), the operator terminal 20 displays, as the area division setting screen, area division condition input text boxes capable of inputting saturation or value corresponding to the area divisions of the primary color area, the whitish area, and the blackish area. At this time, the operator O can set area division conditions by inputting saturation or value in each text box. In addition, the operator O can set area division conditions and display an area division graph (see FIG. 13(5)) indicating the area division by inputting saturation or value corresponding to the area division in each text box. Note that details of the area division setting screen and the area division graph will be described below in (3-5-4. Specific Example 4 of Setting Screen: Area Division Setting Screen).

### 3-5-2. Specific Example 2 of Setting Screen: Designated Range Setting Screen

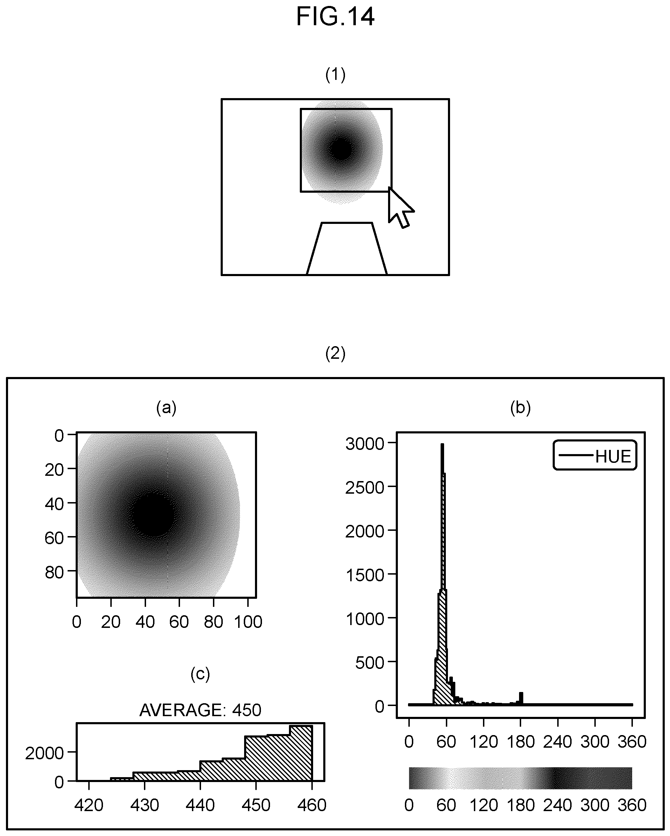

Here, Specific Example 2 of the setting screen displayed by the operator terminal 20 will be described with reference to FIG. 14. FIG. 14 is a diagram illustrating Specific Example 4-2 of each processing of the process monitoring system 100 according to the embodiment. Hereinafter, a video display screen and a video detail screen will be described as details of the designated range setting screen.

### 3-5-2-1. Video Display Screen

As illustrated in the example of FIG. 14(1), the operator terminal 20 displays a video display screen displaying a video of the vicinity of the burner of the manufacturing process of the plant as the designated range setting screen. At this time, the operator O can designate a rectangular range including the flame by surrounding a predetermined range with the pointer on the video of the vicinity of the burner of the manufacturing process of the plant displayed on the video display screen.

At this time, the operator O can designate a range having an arbitrary shape in addition to shapes such as a rectangle, a circle, a fan, and a polygon as the shape of the designated range. In addition, the operator O can designate the range by inputting coordinate values corresponding to the designated range of the video data.

### 3-5-2-2. Video Detail Screen

As illustrated in the example of FIG. 14(2), the operator terminal 20 displays the video detail screen corresponding to the designated range as the designated range setting screen. In the example of FIG. 14(2), as the video detail screen, the operator terminal 20 displays a designated range video indicated by (a), a hue histogram indicated by (b), and an evaluation value histogram indicated by (c).

In the example of FIG. 14(2)(a), the operator terminal 20 displays the designated range video corresponding to the designated range clipped out by the operator O, and displays the pixels in the video horizontal direction on the horizontal axis and the pixels in the video vertical direction on the vertical axis.

In the example of FIG. 14(2)(b), the operator terminal 20 displays a hue histogram indicating the distribution of hues in the video data in the designated range, and displays the total value of the conversion values of the hues with the same numerical value on the horizontal axis and the vertical axis.

In the example of FIG. 14(2)(c), the operator terminal 20 displays an evaluation value histogram indicating the distribution of the evaluation values in the video data of the designated range, displays the total value of the evaluation values on the horizontal axis and the conversion values of the hues of the same numerical values on the vertical axis, and displays the average value of the conversion values in the video data of the designated range.

### 3-5-3. Specific Example 3 of Setting Screen: Conversion Information Setting Screen

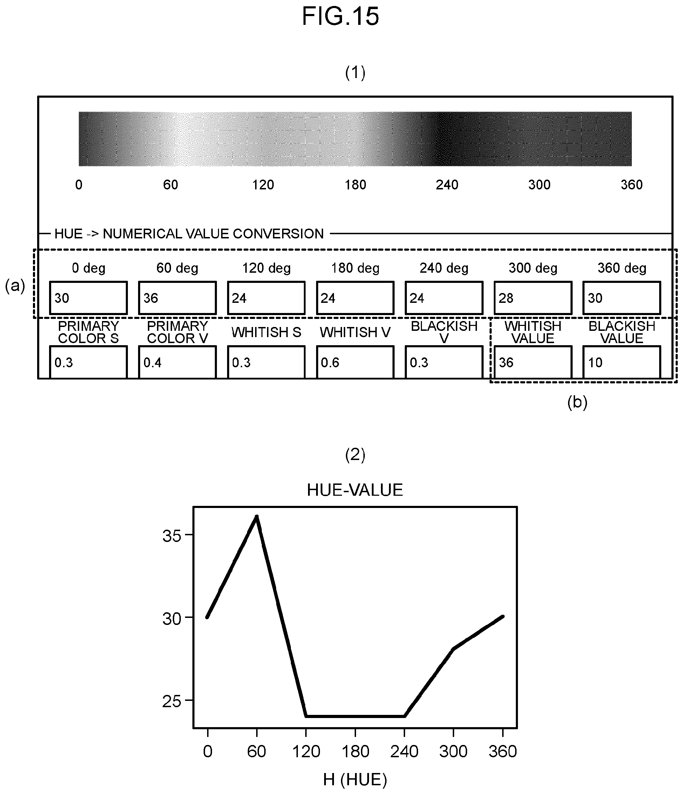

Here, Specific Example 3 of the setting screen displayed by the operator terminal 20 will be described with reference to FIG. 15. FIG. 15 is a diagram illustrating Specific Example 4-3 of each processing of the process monitoring system 100 according to the embodiment. Hereinafter, a conversion information input text box and a conversion function graph screen will be described as details of the conversion information setting screen.

### 3-5-3-1. Conversion Information Input Text Box

As illustrated in the example of FIG. 15(1), the operator terminal 20 displays, as the conversion information setting screen, conversion information input text boxes to which conversion values or fixed values corresponding to color information can be input. In the example of FIG. 15(1), the operator terminal 20 displays conversion value input text boxes indicated by (a) and fixed value input text boxes indicated by (b) as the conversion information input text boxes.

In the example of FIG. 15(1)(a), the operator terminal 20 displays conversion value input text boxes capable of inputting conversion values corresponding to hues for the pigments of the pixels classified into the area division of the primary color area. In addition, in the example of FIG. 15(1)(a), the operator O inputs conversion value "30" corresponding to hue "0", conversion value "36" corresponding to hue "60", conversion value "24" corresponding to hue "120", conversion value "24" corresponding to hue "180", conversion value "24" corresponding to hue "240", conversion value "28" corresponding to hue "300", and conversion value "30" corresponding to hue "360" in the conversion value input text boxes.

In the example of FIG. 15(1)(b), the operator terminal 20 displays a conversion value input text box capable of inputting a fixed value with respect to the pigment of the pixel classified into the area division of the whitish area. In addition, similarly, the operator terminal 20 displays a conversion value input text box capable of inputting a fixed value with respect to the pigment of the pixel classified into the area division of the blackish area. In addition, in the example of FIG. 15(1)(b), the operator O inputs fixed value "36" of the pixel of the area division of the whitish area and fixed value "10" of the pixel of the area division of the blackish area to the conversion value input text boxes, respectively.

### 3-5-3-2. Conversion Function Graph Screen

As illustrated in the example of FIG. 15(2), the operator terminal 20 displays a conversion function graph indicating the relationship between the hue and the conversion value as a setting screen displayable or transitionable from the conversion information setting screen. In the example of FIG. 15(2), the operator terminal 20 plots {hue: "0", conversion value: "30"}, {hue: "60", conversion value: "36"}, {hue: "120", conversion value: "24"}, {hue: "180", conversion value "24"}, {hue: "240", conversion value: "24"}, {hue: "300", conversion value: "28"}, and {hue: "360", conversion value: "30"} as a conversion function graph indicating the relationship between the conversion value input in the conversion value input text boxes by the operator O and the hues, and creates and displays a conversion function graph in which each point is connected by a straight line.

### 3-5-4. Specific Example 4 of Setting Screen: Area Division Setting Screen

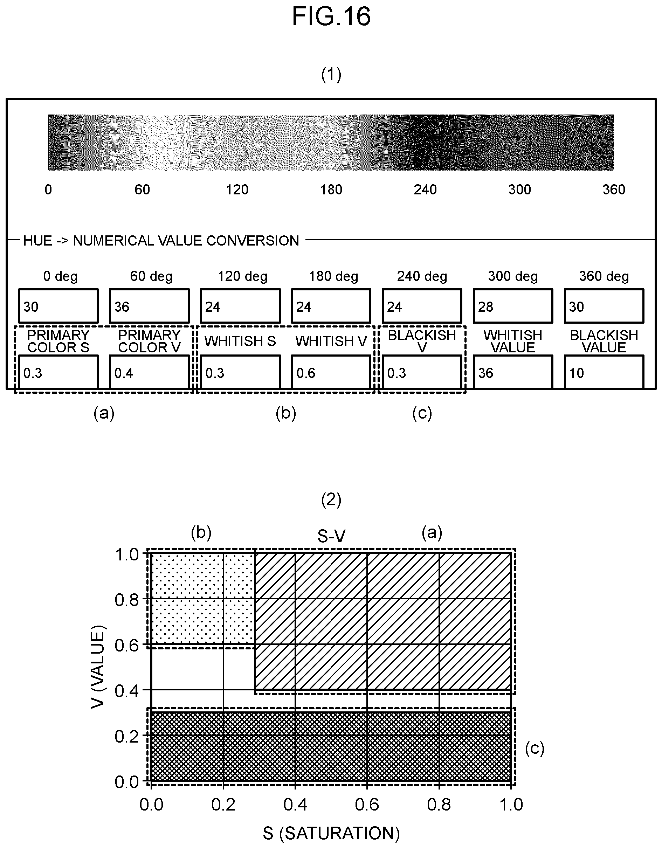

Here, Specific Example 4 of the setting screen displayed by the operator terminal 20 will be described with reference to FIG. 16. FIG. 16 is a diagram illustrating Specific Example 4-4 of each processing of the process monitoring system 100 according to the embodiment. Hereinafter, the area division condition input text box and an area division graph screen will be described as details of the area division setting screen.

### 3-5-4-1. Area Division Condition Input Text Box

As illustrated in the example of FIG. 16(1), the operator terminal 20 displays an area division condition input text box into which an area division condition can be input as an area division setting screen. In the example of FIG. 16(1), the operator terminal 20 displays, as the area division condition input text box, a primary color area division condition input text box indicated by (a), a whitish area division condition input text box indicated by (b), and a blackish area division condition input text box indicated by (c).

In the example of FIG. 16(1)(a), the operator terminal 20 displays primary color area division condition input text boxes to which saturation and value that are area division conditions of the primary color area can be input. In addition, in the example of FIG. 16(1)(a), the operator O inputs "0.3" as the minimum value of the saturation and "0.4" as the minimum value of the value as the area division conditions of the primary color area.

In the example of FIG. 16(1)(b), the operator terminal 20 displays whitish area division condition input text boxes to which saturation and value that are area division conditions of the whitish area can be input. In addition, in the example of FIG. 16(1)(b), the operator O inputs "0.3" as the maximum value of the saturation and "0.6" as the minimum value of the value as the area division conditions of the whitish area.

In the example of FIG. 16(1)(c), the operator terminal 20 displays a blackish area division condition input text box to which value that is an area division condition of the blackish area can be input. In addition, in the example of FIG. 16(1)(c), the operator O inputs "0.3" as the maximum value of the value as the area division condition of the blackish area.

### 3-5-4-2. Area Division Graph Screen

As illustrated in the example of FIG. 16(2), the operator terminal 20 displays an area division graph indicating the relationship between the area division condition and the area division as a setting screen displayable or transitionable from the area division setting screen. In the example of FIG. 16(2), the operator terminal 20 displays the primary color area indicated by (a), the whitish area indicated by (b), and the blackish area indicated by (c) as the area division graph.

In the example of FIG. 16(2)(a), the operator terminal 20 displays the primary color area (hatching line). In addition, in the example of FIG. 16(2)(a), the operator terminal 20 displays {saturation: "0.3 to 1.0", value: "0.4 to 1.0"} as the area division condition of the primary color area. Note that the operator terminal 20 can also set the saturation and the value with a numerical value of 0 to 255.

In the example of FIG. 16(2)(b), the operator terminal 20 displays the whitish area (shading). In addition, in the example of FIG. 16(2)(b), the operator terminal 20 displays {saturation: "0.0 to 0.3 ", value: "0.6 to 1.0"} as the area division condition of the whitish area. Note that the operator terminal 20 can also set the saturation and the value with a numerical value of 0 to 255.

In the example of FIG. 16(2)(c), the operator terminal 20 displays the blackish area (diamond mesh). In addition, in the example of FIG. 16(2)(c), the operator terminal 20 displays {value: "0.0 to 0.3"} as the area division condition of the blackish area. Note that the operator terminal 20 can also set the value with a numerical value of 0 to 255.

### 4. Flow of Each Processing of Processing of Process Monitoring System 100

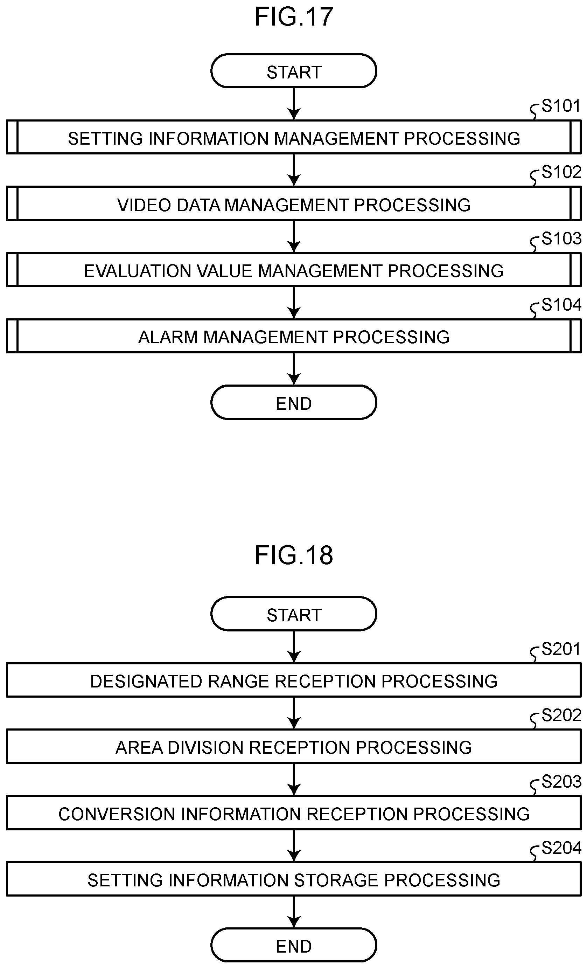

A flow of processing of the process monitoring system 100 according to the embodiment will be described with reference to FIGS. 17 to 21. Hereinafter, a flow of processing of the entire process monitoring system 100 will be described, and then setting information management processing, video data management processing, evaluation value management processing, and alarm management processing will be described as each processing.

### 4-1. Processing of Entire Process Monitoring System 100

A flow of processing of the entire process monitoring system 100 according to the embodiment will be described with reference to FIG. 17. FIG. 17 is a flowchart illustrating an example of a flow of the entire process monitoring system 100 according to the embodiment. Note that the processing of Steps S101 to S104 described below can be executed in a different order. In addition, there may be omitted processing among the pieces of processing of Steps S101 to S104 described below.

### 4-1-1. Setting Information Management Processing

Firstly, the process monitoring system 100 executes the setting information management processing (Step S101). For example, the process monitoring system 100 manages the setting information set by the operator O by executing processing of Steps S201 to S204 described below.

### 4-1-2. Video Data Management Processing

Secondly, the process monitoring system 100 executes the video data management processing (Step S102). For example, the process monitoring system 100 manages the video data of the monitoring target captured by the camera 30 by executing processing of Steps S301 to S303 described below.

### 4-1-3. Evaluation Value Management Processing

Thirdly, the process monitoring system 100 executes the evaluation value management processing (Step S103). For example, the process monitoring system 100 manages the evaluation value for evaluating the state of the monitoring target by executing processing of Steps S401 to S408 described below.

### 4-1-4. Alarm Management Processing

Fourthly, the process monitoring system 100 executes the alarm management processing (Step S104). For example, the process monitoring system 100 manages an alarm indicating an abnormality state of the monitoring target by executing processing of Steps S501 to S504 described below.

### 4-2. Setting Information Management Processing

A flow of the setting information management processing of the process monitoring system 100 according to the embodiment will be described with reference to FIG. 18. FIG. 18 is a flowchart illustrating an example of a flow of the setting information management processing of the process monitoring system 100 according to the embodiment. Note that the processing of Steps S201 to S204 described below can be executed in a different order. In addition, there may be omitted processing among the pieces of processing of Steps S201 to S204 described below.

### 4-2-1. Designated Range Reception Processing

Firstly, the server device 10 executes the designated range reception processing (Step S201). For example, the server device 10 receives the designated range of the video data set by the operator O via the operator terminal 20.

### 4-2-2. Area Division Reception Processing

Firstly, the server device 10 executes the area division reception processing (Step S202). For example, the server device 10 receives the area divisions of the primary color area, the whitish area, and the blackish area set by the operator O via the operator terminal 20.

### 4-2-3. Conversion Information Reception Processing

Firstly, the server device 10 executes the conversion information reception processing (Step S203). For example, the server device 10 receives the conversion information such as the conversion table, the conversion function, and the fixed value set by the operator O via the operator terminal 20.

### 4-2-4. Setting Information Storage Processing

Fourthly, the server device 10 executes setting information storage processing (Step S204), and ends the setting information management processing. For example, the server device 10 stores the setting information including the designated range of the video data, the area division, and the conversion information in the setting information storage unit 14a.

### 4-3. Video Data Management Processing

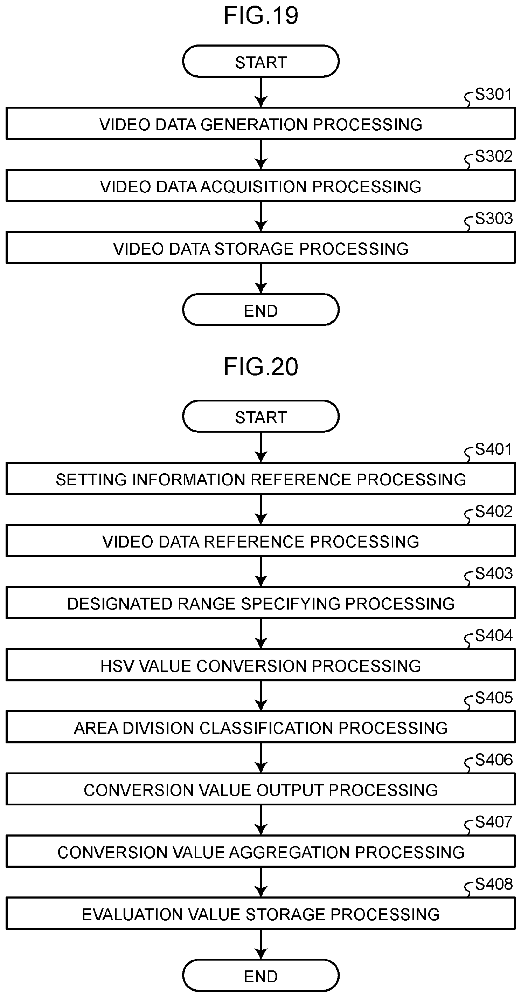

A flow of the video data management processing of the process monitoring system 100 according to the embodiment will be described with reference to FIG. 19. FIG. 19 is a flowchart illustrating an example of a flow of video data management processing of the process monitoring system 100 according to the embodiment. Note that the processing of Steps S301 to S303 described below can be executed in a different order. In addition, there may be omitted processing among the pieces of processing of Steps S301 to S303 described below.

### 4-3-1. Video Data Generation Processing

Firstly, the camera 30 executes video data generation processing (Step S301). For example, the camera 30 captures an image of the monitoring target and generates video data of a still image or a moving image.

### 4-3-2. Video Data Acquisition Processing

Secondly, the server device 10 executes video data acquisition processing (Step S302). For example, the server device 10 acquires video data of a still image or a moving image generated by the camera 30.

### 4-3-3. Video Data Storage Processing

Thirdly, the server device 10 executes video data storage processing (Step S303), and ends the video data management processing. For example, the server device 10 stores video data of a still image or a moving image acquired from the camera 30 in the video data storage unit 14b.

4-4. Evaluation Value Management Processing A flow of the evaluation value management processing of the process monitoring system 100 according to the embodiment will be described with reference to FIG. 20. FIG. 20 is a flowchart illustrating an example of a flow of the evaluation value management processing of the process monitoring system 100 according to the embodiment. Note that the processing of Steps S401 to S408 described below can be executed in a different order. In addition, there may be omitted processing among the pieces of processing of Steps S401 to S408 described below.

### 4-4-1. Setting Information Reference Processing

Firstly, the server device 10 executes setting information reference processing (Step S401). For example, the server device 10 refers to the setting information including the designated range of the video data, the area division, and the conversion information stored in the setting information storage unit 14a.

### 4-4-2. Video Data Reference Processing

Secondly, the server device 10 executes video data reference processing (Step S402). For example, the server device 10 refers to the video data stored in the video data storage unit 14b.

### 4-4-3. Designated Range Specifying Processing

Thirdly, the server device 10 executes the designated range specifying processing (Step S403). For example, the server device 10 specifies the designated range of the video data using the designated range indicated by the setting information.

### 4-4-4. HSV Value Conversion Processing

Fourthly, the server device 10 executes the HSV value conversion processing (Step S404). For example, the server device 10 converts color information of each pixel included in the designated range of the video data into an HSV value that is a combination of hue, saturation, and value.

### 4-4-5. Area Division Classification Processing

Fifthly, the server device 10 executes the area division classification processing (Step S405). For example, the server device 10 classifies the pigment of each pixel into the area division of the primary color area, the whitish area, and the blackish area using the area division indicated by the setting information.

### 4-4-6. Conversion Value Output Processing

Sixthly, the server device 10 executes the conversion value output processing (Step S406). For example, the server device 10 outputs the conversion value of each pixel by using the conversion information according to the classified area division.

### 4-4-7. Conversion Value Aggregation Processing

Seventhly, the server device 10 executes the conversion value aggregation processing (Step S407). For example, the server device 10 aggregates the output conversion values of the pixels, and calculates a total value or an average value of the conversion values of all the pixels as the evaluation value. At this time, the server device 10 can also create a table or a graph indicating the conversion value or the evaluation value.

### 4-4-8. Evaluation Value Storage Processing

Eighthly, the server device 10 executes evaluation value storage processing (Step S408), and ends the evaluation value management processing. For example, the server device 10 stores the calculated evaluation value in the evaluation value storage unit 14c.

### 4-5. Alarm Management Processing

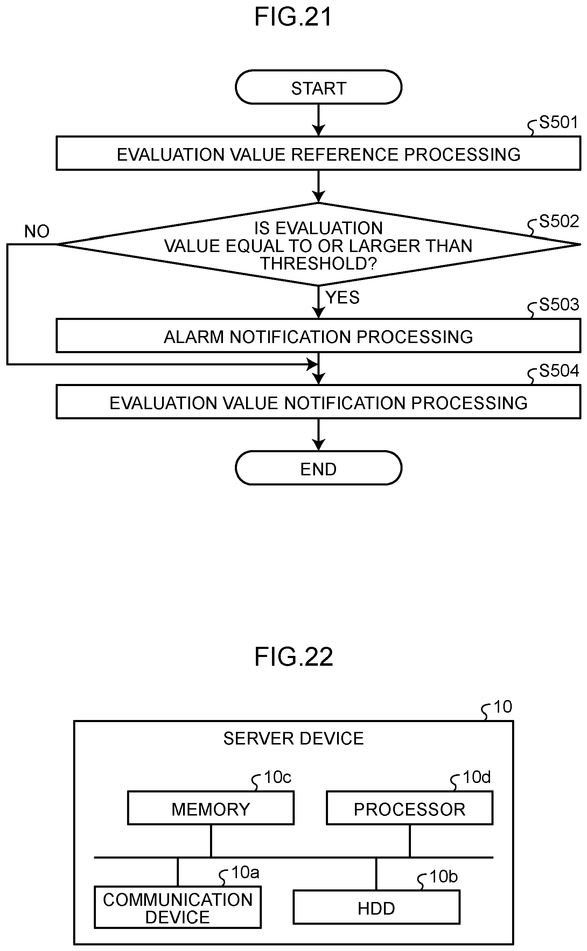

A flow of the video data management processing of the process monitoring system 100 according to the embodiment will be described with reference to FIG. 21. FIG. 21 is a flowchart illustrating an example of a flow of alarm management processing of the process monitoring system 100 according to the embodiment. Note that the processing of Steps S501 to S504 described below can be executed in a different order. In addition, there may be omitted processing among the pieces of processing of Steps S501 to S504 described below.

### 4-5-1. Evaluation Value Reference Processing

Firstly, the server device 10 executes evaluation value reference processing (Step S501). For example, the server device 10 refers to the evaluation value stored in the evaluation value storage unit 14c. At this time, when the evaluation value exceeds a threshold (Step S502: Yes), the server device 10 proceeds to the processing of Step S503. On the other hand, when the evaluation value does not exceed the threshold (Step S502: No), the server device 10 proceeds to the processing of Step S504.

### 4-5-2. Alarm Notification Processing

Secondly, the server device 10 executes the alarm notification processing (Step S503). For example, the server device 10 transmits alarm data indicating an abnormality state of the monitoring target to the operator terminal 20, and causes the operator terminal 20 to display the alarm to notify the operator O of the alarm.

### 4-5-3. Evaluation Value Notification Processing

Thirdly, the server device 10 executes the evaluation value notification processing (Step S504), and ends the alarm management processing. For example, the server device 10 transmits table data and graph data indicating the evaluation value to the operator terminal 20, and notifies the operator O of the evaluation value by causing the operator terminal 20 to display a table and a graph indicating the evaluation value.

### 5. Effects of Embodiment

Finally, effects of the embodiment will be described. Hereinafter, Effects 1 to 13 corresponding to the processing according to the embodiment will be described.

### 5-1. Effect 1

Firstly, in the processing according to the above-described embodiment, the server device 10 receives the conversion information including each conversion value corresponding to each hue, acquires the video data of the monitoring target captured by the camera 30, and calculates the evaluation value for evaluating the state of the monitoring target on the basis of the received conversion information and the acquired video data. Therefore, in the present processing, the state of the monitoring target can be effectively grasped.

### 5-2. Effect 2

Secondly, in the processing according to the above-described embodiment, the server device 10 receives the designated range of the video data, and calculates the evaluation value using each conversion value corresponding to each hue of each pixel of the video data included in the designated range. Therefore, in the present processing, the state of the monitoring target designated by the operator O can be effectively grasped.

### 5-3. Effect 3

Thirdly, in the processing according to the above-described embodiment, the server device 10 receives the designated range by the operation of the operator O on the video displayed on the setting screen of the operator terminal 20 of the operator O. Therefore, in the present processing, it is possible to effectively grasp the state of the monitoring target designated by the operator O to be monitored in real time.

### 5-4. Effect 4

Fourthly, in the processing according to the above-described embodiment, the server device 10 receives the area division indicating the primary color area, the whitish area, and the blackish area, and calculates the evaluation value using the conversion information set according to the area division. Therefore, in the present processing, the state of the monitoring target can be effectively grasped by adopting a conversion method according to the pigments of different area divisions.

### 5-5. Effect 5

Fifthly, in the processing according to the above-described embodiment, the server device 10 receives the area division by the operator O inputting the saturation and the value on the setting screen of the operator terminal 20 of the operator O. Therefore, in the present processing, the state of the monitoring target can be effectively grasped by adopting a conversion method according to the pigments of different area divisions in consideration of not only the hue but also the saturation or the value.

### 5-6. Effect 6

Sixthly, in the processing according to the above-described embodiment, the server device 10 receives the conversion function indicating the relationship between each hue and each conversion value as the conversion information, and calculates the evaluation value using each conversion value corresponding to each hue of each pixel of the video data converted by the conversion function. Therefore, in the present processing, the state of the monitoring target can be effectively grasped by adopting the conversion function that facilitates the setting of the conversion information.

### 5-7. Effect 7

Seventhly, in the processing according to the above-described embodiment, the server device 10 receives the conversion function indicating a straight line equation between predetermined hues. Therefore, in the present processing, the state of the monitoring target can be effectively grasped by adopting the straight line equation as the conversion function that facilitates the setting of the conversion information.

### 5-8. Effect 8

Eighthly, in the processing according to the above-described embodiment, the server device 10 receives the conversion function indicating a curve equation between predetermined hues. Therefore, in the present processing, the state of the monitoring target can be effectively grasped by adopting a curve equation as the conversion function that facilitates the setting of the conversion information.

### 5-9. Effect 9

Ninthly, in the processing according to the above-described embodiment, the server device 10 calculates, as the evaluation value, a total value of conversion values corresponding to hues of pixels of the video data. Therefore, in the present processing, the state of the monitoring target can be effectively grasped by calculating the intensity of the entire video as the evaluation value.

### 5-10. Effect 10

Tenthly, in the processing according to the above-described embodiment, the server device 10 calculates an average value of conversion values corresponding to hues of pixels of the video data as the evaluation value. Therefore, in the present processing, the state of the monitoring target can be effectively grasped by calculating the averaged intensity of the video as the evaluation value.

### 5-11. Effect 11

Eleventhly, in the processing according to the above-described embodiment, when the calculated evaluation value exceeds the threshold, the server device 10 notifies the operator O of an alarm indicating an abnormality of the monitoring target. Therefore, in the present processing, the state of the monitoring target can be effectively grasped without constant monitoring by the operator O.

### 5-12. Effect 12

Twelfthly, in the processing according to the above-described embodiment, the server device 10 notifies the operator O of a table or a graph indicating the calculated evaluation value. Therefore, in the present processing, the past state of the monitoring target can be effectively grasped by the operator O.

### 5-13. Effect 13

Thirteenthly, in the processing according to the above-described embodiment, the server device 10 acquires still image data or moving image data output by the camera 30 installed in the manufacturing process of the plant. Therefore, in the present processing, the state of the manufacturing process of the plant requiring safety and urgency can be effectively grasped.

### 6. Application Examples of Embodiment

Application examples of the embodiment will be described. Hereinafter, Application Examples 1 to 8 of the embodiment will be described.

### 6-1. Application Example 1

As Application Example 1 of the embodiment, it is possible to detect impurities in iron ore conveyed by a conveyor belt in a manufacturing process of a plant.

### 6-2. Application Example 2

As Application Example 2 of the embodiment, it is possible to detect impurities contained in a fluid flowing through a pipe in a manufacturing process of a plant.

### 6-3. Application Example 3

As Application Example 3 of the embodiment, it is possible to detect an abnormality of a water level or a water flow of a fluid flowing through a pipe in a manufacturing process of a plant.

### 6-4. Application Example 4

As Application Example 4 of the embodiment, it is possible to detect distortion of a pipe or a tank due to pressure in a manufacturing process of a plant.

### 6-5. Application Example 5

As Application Example 5 of the embodiment, it is possible to detect an abnormality of a product conveyed by a conveyor belt in a manufacturing process of a plant.

### 6-6. Application Example 6

As Application Example 6 of the embodiment, it is possible to detect an abnormality of smoke discharged from a stack in a manufacturing process of a plant.

### 6-7. Application Example 7

As Application Example 7 of the embodiment, it is possible to detect intrusion of a person or an animal in a building, a farm land, or the like.

### 6-8. Application Example 8

As Application Example 8 of the embodiment, it is possible to detect an abnormality in a park, a road, a river, or the like.

### 7. System

The processing procedure, the control procedure, the specific name, and the information including various data and parameters illustrated in the document and the drawings can be arbitrarily changed unless otherwise specified.

In addition, each component of each device illustrated in the drawings is functionally conceptual, and is not necessarily physically configured as illustrated in the drawings. That is, specific forms of distribution and integration of the devices are not limited to those illustrated in the drawings. That is, all or a part thereof can be functionally or physically distributed and integrated in an arbitrary unit according to various loads, usage conditions, and the like.

Further, all or an arbitrary part of processing functions performed in the devices can be achieved by a CPU and a program analyzed and executed by the CPU, or can be achieved as hardware by wired logic.

### 8. Hardware

Next, a hardware configuration example of the server device 10 that is an information providing apparatus will be described. Note that other devices can have a similar hardware configuration. FIG. 22 is a diagram describing a hardware configuration example according to the embodiment. As illustrated in FIG. 22, the server device 10 includes a communication device 10a, a hard disk drive (HDD) 10b, a memory 10c, and a processor 10d. In addition, the units illustrated in FIG. 22 are connected to each other by a bus or the like.

The communication device 10a is a network interface card or the like, and communicates with another server. The HDD 10b stores programs and databases for operating the functions illustrated in FIG. 3.

The processor 10d reads a program for executing processing similar to the processing units illustrated in FIG. 3 from the HDD 10b or the like and loads the program to the memory 10c, thereby operating the processes for executing the functions described with reference to FIG. 3 and the like. For example, this process executes functions similar to the processing units included in the server device 10. Specifically, the processor 10d reads a program having functions similar to those of the reception unit 15a, the acquisition unit 15b, the calculation unit 15c, the notification unit 15d, and the like from the HDD 10b or the like. Then, the processor 10d executes a process of executing processing similar to those of the reception unit 15a, the acquisition unit 15b, the calculation unit 15c, the notification unit 15d, and the like.

As described above, the server device 10 operates as a device that executes various processing methods by reading and executing the program. In addition, the server device 10 can achieve functions similar to those of the above-described embodiment by reading the program from a recording medium by a medium reading device and executing the read program. Note that the program of the embodiment is not limited to being executed by the server device 10. For example, the present invention can be similarly applied to a case where another computer or server executes a program or a case where these execute a program in cooperation.

This program can be distributed via a network such as the Internet. In addition, this program is recorded on a computer-readable recording medium such as a hard disk, a flexible disk (FD), a CD-ROM, a magneto-optical disk (MO), or a digital versatile disc (DVD), and can be executed by being read from the recording medium by the computer.

According to the present invention, there is an effect that a state of a monitoring target can be effectively grasped.

## Claims

1. An information providing apparatus (10) comprising:
a reception unit (15a) that receives conversion information including each conversion value corresponding to each hue;
an acquisition unit (15b) that acquires video data of a monitoring target captured by an imaging device (30); and
a calculation unit (15c) that calculates an evaluation value for evaluating a state of the monitoring target on a basis of the received conversion information and the acquired video data.

2. The information providing apparatus (10) according to claim 1, wherein
the reception unit (15a)
receives a designated range of the video data, and
the calculation unit (15c)
calculates the evaluation value using each conversion value corresponding to each hue of each pixel of the video data included in the designated range.

3. The information providing apparatus (10) according to claim 2, wherein
the reception unit (15a)
receives the designated range by an operation of a user on a video displayed on a setting screen of a user terminal of the user.

4. The information providing apparatus (10) according to any one of claims 1 to 3, wherein
the reception unit (15a)
receives an area division indicating a primary color area, a whitish area, and a blackish area, and
the calculation unit (15c)
calculates the evaluation value using the conversion information set according to the area division.

5. The information providing apparatus (10) according to claim 4, wherein
the reception unit (15a)
receives the area division by a user inputting saturation and value on a setting screen of a user terminal (20) of the user.

6. The information providing apparatus (10) according to any one of claims 1 to 5, wherein
the reception unit (15a)
receives a conversion function indicating a relationship between each hue and each conversion value as the conversion information, and
the calculation unit (15c)
calculates the evaluation value using each conversion value corresponding to each hue of each pixel of the video data converted by the conversion function.

7. The information providing apparatus (10) according to claim 6, wherein
the reception unit (15a)
receives the conversion function indicating a straight line equation between predetermined hues.

8. The information providing apparatus (10) according to claim 6, wherein
the reception unit (15a)
receives the conversion function indicating a curve equation between predetermined hues.

9. The information providing apparatus (10) according to any one of claims 1 to 8, wherein
the calculation unit (15c)
calculates a total value of each conversion value corresponding to each hue of each pixel of the video data as the evaluation value.

10. The information providing apparatus (10) according to any one of claims 1 to 9, wherein
the calculation unit (15c)
calculates an average value of each conversion value corresponding to each hue of each pixel of the video data as the evaluation value.

11. The information providing apparatus (10) according to any one of claims 1 to 10, further comprising:
a notification unit (15d) that notifies a user of an alarm indicating an abnormality of the monitoring target when the calculated evaluation value exceeds a threshold.

12. The information providing apparatus (10) according to any one of claims 1 to 11, further comprising:
a notification unit (15d) that notifies a user of a table or a graph indicating the calculated evaluation value.

13. The information providing apparatus (10) according to any one of claims 1 to 12, wherein
the acquisition unit (15b)
acquires still image data or moving image data output from the imaging device installed in a manufacturing process of a plant.

14. An information providing method for a computer (10) to execute processing of:
receiving conversion information including each conversion value corresponding to each hue;
acquiring video data of a monitoring target captured by an imaging device (30); and
calculating an evaluation value for evaluating a state of the monitoring target on a basis of the received conversion information and the acquired video data.

15. An information providing program causing a computer (10) to execute processing of:
receiving conversion information including each conversion value corresponding to each hue;
acquiring video data of a monitoring target captured by an imaging device (30); and
calculating an evaluation value for evaluating a state of the monitoring target on a basis of the received conversion information and the acquired video data.
